# EUROPÄISCHE PATENTSCHRIFT

(11) **EP 1 319 468 B1**
(45) Veröffentlichungstag und Bekanntmachung des Hinweises auf die Patenterteilung: **13.07.2005**
(21) Anmeldenummer: 02406068.3
(22) Anmeldetag: 06.12.2002
(51) Int. Cl.: B24B 45/00, B24D 7/16, F16B 39/10, F16D 1/06, B24B 55/00

(54) **Werkzeugaufnahme für ein Schleifgerät**
Tool holding fixture for a grinding device
Support d'outil pour un dispositif de meulage

(30) Priorität: 17.12.2001 DE 10161930
(43) Veröffentlichungstag der Anmeldung: 18.06.2003
(73) Patentinhaber: HILTI Aktiengesellschaft, 9494 Schaan (LI)
(72) Erfinder: Rupprecht, Hans, 81477 München (DE); Holzmeier, Georg, 86916 Kaufering (DE); Jakob, Manfred, 86916 Kaufering (DE)
(74) Vertreter: Wildi, Roland

(56) Entgegenhaltungen:
- US-A- 3 912 411
- US-A- 5 772 373

## Beschreibung

Die Erfindung betrifft ein Schleifgerät mit einer, In eine Arbeitsdrehrichtung, motonsch angetnebenen Antriebsspindel, die am freien Ende eine Werkzeugaufnahme aufweist, welche mit einem drehfest an der Antriebsspindel befestigten Flansch und einer, auf das freie Ende aufschraubbaren Mutter, zum Verspannen eines Werkzeuges gegen den Flansch, versehen ist. Die Werkzeugaufnahme weist dabei eine Drehsicherung auf, die eine Rotation des Werkzeuges gegenüber der Antriebsspindel in Arbeitsdrehrichtung der Antriebsspindel verhindert.

Schleifgeräte der oben genannten Art weisen eine Werkzeugaufnahme zum Verspannen eines Werkzeuges auf. Dabei wird auf einer Antriebsspindel eine Mutter aufgeschraubt, welche das Werkzeug, in Längsrichtung der Antriebsspindel, gegen einen drehfest an der Antriebsspindel gelagerten Flansch verspannt.

Aus der DE 4 432 973 A1 ist ein Schleifgerät mit einer in eine Arbeitsdrehrichtung motorisch angetriebenen Antriebsspindel bekannt. Die Arbeitsspindel weist am freien Ende eine Werkzeugaufnahme auf, welche mit einem drehfest an der Antriebsspindel befestigten Flansch und einer auf das freie Ende aufschraubbaren Mutter, zum Verspannen eines Werkzeuges gegen den Flansch, versehen ist.

Nachteilig an der bekannten Lösung ist, dass die Mutter sich unbeabsichtigt von der Antriebsspindel loslösen kann. Insbesondere bei einer Anwendung einer Bremsvorrichtung, welche die in Arbeitsdrehrichtung rotierende Antriebsspindel innert kurzer Zeit abbremst, kann sich die Mutter von der Antriebsspindel lösen und damit das Werkzeug freigeben.

Aus der US 3 912 411 ist ein Schleifgerät gemäß dem Oberbegriff des unabhängigen Anspruchs 1 mit einer in eine Arbeiwtldrehrichtung motorisch angetriebenen Antriebsspindel bekannt Die Antriebsspindel weist an einem freien Ende eine Werkzeugaufnahme auf, die mit einem drehfest an der Antriebsspindel befestigten Flansch und einer, auf das freie Ende aufschraubbaren Mutter, zum Verspannen des Werkzeugs gegen den Flansch versehen ist Zwischen der Werkzeugaufnahme und dem Werkzeug ist eine Drehsicherung ausgebildet, die eine Rotation des Werkzeugs gegenüber der Antriebsspindel in deren Arbeitsdrehrichtung verhindert.

Der vorliegenden Erfindung liegt die Aufgabe zugrunde, ein wirtschaftlich herstellbares Schleifgerät mit einer Werkzeugaufnahme zum lösbaren Festlegen eines Werkzeuges zu schaffen, das ein Aufdrehen der Mutter, bei einem in Arbeitsdrehrichtung auf das Werkzeug wirkenden Drehmoment, verhindert.

Erfindungsgemäss wird die Aufgabe dadurch gelöst, dass die Drehsicherung als Federelement ausgebildet ist, welches das Werkzeug zum freien Ende der Antriebsspindel hin vorspannt, um eine spielfreie Führung des Werkzeugs in der Werkzeugaufnahme zu gewährleisten. Beim Einspannen des Werkzeugs in die Werkzeugaufnahme gewährleistet das Federelement ein Anliegen des Werkzeugs an der Mutter und hebt damit ein allenfalls vorhandenes Spiel zwischen den beiden Teilen auf. Dadurch ist sichergestellt, dass eine lockere auf die Antriebsspindel aufgeschraubte Mutter durch das Federelement an der Antriebsspindel gegen ein Loslösen gesichert ist.

Durch die Drehsicherung wird eine Rotation des Werkzeuges gegenüber der Antriebsspindel in die Arbeitsdrehrichtung verhindert und damit ein Loslösen der Mutter, die im Verspannten Zustand reibschlüssig und/oder formschlüssig mit dem Werkzeug zusammenwirkt.

Die Drehsicherung weist vorzugsweise zumindest eine, gegenüber der Antriebsspindel drehfest gelagerte, entgegen der Arbeitsrichtung wirkende Anschlagsschulter auf, um eine direkte Kopplung der Drehbewegung der Antriebsspindel mit der Drehsicherung sicherzustellen.

Das Federelement ist vorzugsweise zwischen der Flansch und dem Werkzeug gelagert, um eine kompakte und staubdichte Werkzeugaufnahme sicherzustellen. Ausserdem gewährleistet der drehfest mit der Antriebsspindel verbundene Flansch eine konstruktiv einfache und robuste Lagerung der Drehsicherung.

Das Federelement ist vorteilhafterweise als zumindest eine Federzunge eines an einem, am Flansch gelagerten, Sperrrings ausgebildet, um eine wirtschaftliche Herstellung des Sperrrings und des Federelements sicherzustellen. In einer weiteren Ausführungsform ist der Sperrring mit der oder den Federzungen aus einem Blechteil hergestellt.

Der Sperrring ist vorzugsweise drehfest am Flansch gelagert, um eine konstruktiv einfache, drehfeste Lagerung des Sperrrings gegenüber der Antriebsspindel sicherzustellen.

Vorteilhafterweise erstreckt sich das freie Ende der Federzunge im Wesentlichen zum freien Ende der Antriebsspindel hin, um das Werkzeug zum freien Ende der Antriebsspindel hin vorzuspannen. Die Anschlagsschulter ist vorzugsweise durch die Stirnfläche des freien Endes der Federzunge gebildet, um eine wirtschaftliche Herstellung der Drehsicherung zu gewahrleisten.

Das Werkzeug weist vorteilhafterweise zumindest eine zur Anschlagsschulter korrespondierende Gegenschulter auf, die beispielsweise von einer Profilierung im Werkzeug gebildet sein kann.

Eine vorzugsweise von Durchbrechungen im Werkzeug gebildete Gegenschulter stellt vorallem eine wirtschaftliche Herstellung der Werkzeugaufnahme sicher.

Vorteilhafterweise weist das Werkzeug eine Werkzeugsicherung auf, die eine Rotation des Werkzeuges gegenüber der Antriebsspindel in Arbeitsdrehrichtung der Antriebsspindel verhindert. Durch die Ausbildung einer Werkzeugsicherung am Werkzeug ist die Werkzeugaufnahme konstruktiv einfacher ausgebildet und daher wirtschaftlicher in der Herstellung.

Vorzugsweise weist die Werkzeugsicherung zumindest eine, gegenüber der Antriebsspindel drehfest gelagerte, entgegen der Arbeitsrichtung wirkende, Anschlagsschulter auf.

Die Erfindung wird nachstehend anhand zweier Ausführungsbeispiele näher erläutert. Es zeigen:
- Fig. 1: Eine perspektivische Teilansicht einer Werkzeugaufnahme mit einer ersten Ausführung eines Werkzeuges und ohne Flansch;
- Fig. 2: ein Querschnitt der in Fig. 1 dargestellten Werkzeugaufnahme mit dem Flansch und dem in der Werkzeugaufnahme verspannten Werkzeug;
- Fig. 3: ein Querschnitt einer zweiten Ausführung eines Werkzeugs.

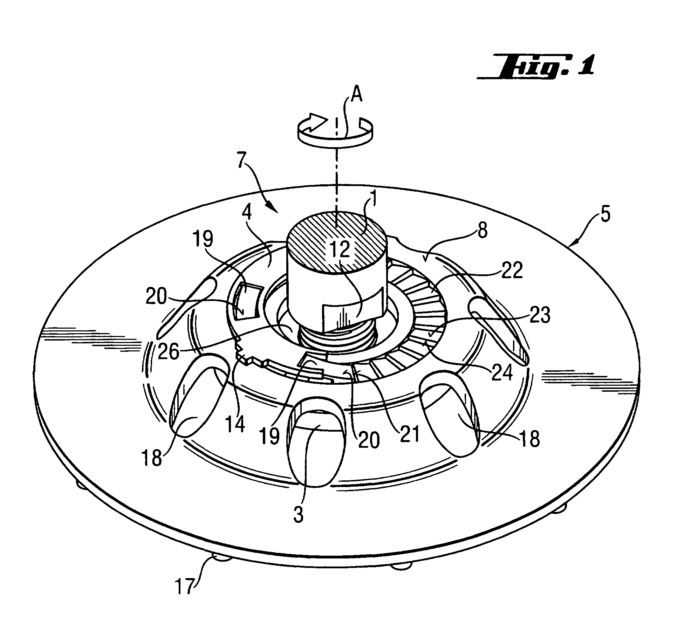

In den Fig. 1 bis 3 sind zwei Ausführungen eines erfindungsgemässen Schleifgerät, insbesondere Betonschleifgerät, mit einer, in eine Arbeitsdrehrichtung A, motorisch angetriebenen Antriebsspindel 1, die am freien Ende 6 eine, insgesamt mit 7 bezeichnete, Werkzeugaufnahme aufweist, dargestellt. Die Werkzeugaufnahme 7 ist mit einem drehfest an der Antriebsspindel 1 befestigten Flansch 2 und einer, auf das freie Ende 6 aufschraubbaren Mutter 3, zum Verspannen eines Werkzeuges 5 gegen den Flansch 2, versehen. Ferner weist die Werkzeugaufnahme 7 eine Drehsicherung auf, die eine Rotation des Werkzeuges 5 gegenüber der Antriebsspindel 1 in Arbeitsdrehrichtung A der Antriebsspindel 1 verhindert.

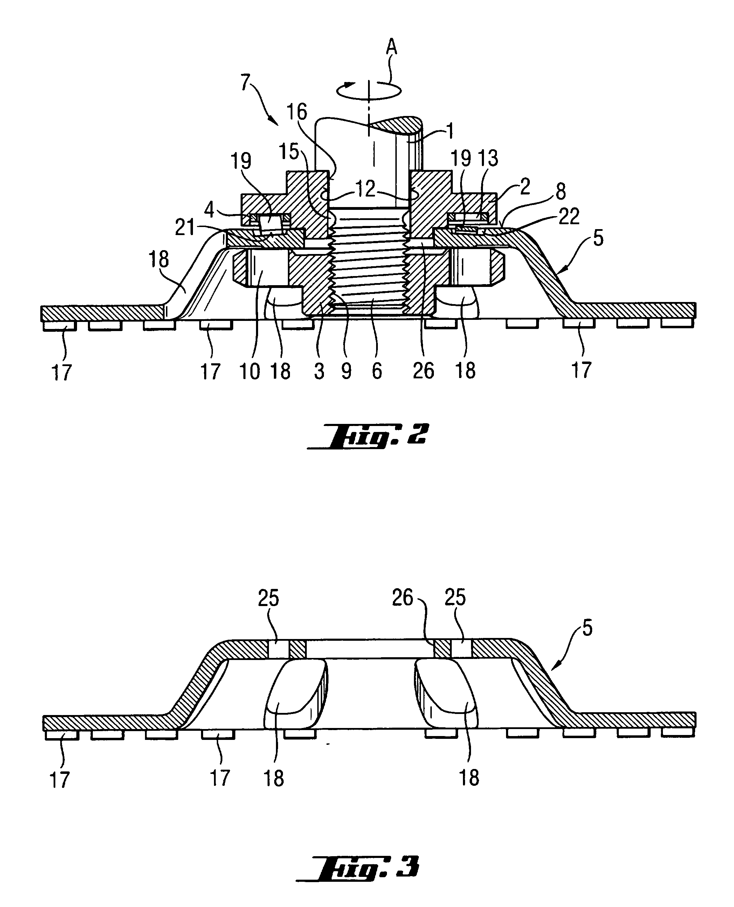

Die Mutter 3 weist einen T-förmigen Längsschnitt auf. Im radial äusseren Bereich weist die Mutter mehrere, insbesondere in Fig. 2 dargestellte, Eingriffsbohrung 10 auf, die als Eingnffsmittel zum Loslösen der, durch eine Gewindeverbindung 9 lösbar an der Antriebsspindel 1 festlegbaren Mutter dienen.

Der im wesentlichen scheibenförmige Flansch 2 weist eine zentrale Führungsbohrung 15 zur Durchführung der Antriebsspindel 1 auf. Die Führungsbohrung 15 weist zwei parallel verlaufende, einander diametral und am äusseren Umfang angeordnete Stege 16 auf, die mit komplementär dazu an der Antriebsspindel 1 angeordneten Ausnehmungen 12 zusammenwirken und dadurch den Flansch 2 drehfest an der Antriebsspindel 1 lagern. An der radial äusseren, dem freien Ende 6 zugewandten Seite weist der Flansch 2 eine ringförmige, zur Seite hin offen ausgebildete Ringausnehmung 13, zur Lagerung des als Drehsicherung ausgebildeten Sperrrings 4, auf. Der ringförmig ausgebildete Sperrring 4 greift mit zwei, einander diametral angeordneten Mitnahmestegen 14 in jeweils eine komplementär dazu, am Flansch 2 ausgebildete, nicht dargestellte, Mitnahmeausnehmung, durch die der Flansch 2 eine drehfeste Verbindung zwischen der Antriebsspindel 1 und der Drehsicherung 4 gewährleisten.

Der zwischen dem Flansch 2 und dem Werkzeug 5 gelagerte Sperrring 4 weist vier als Federelemente, in Längsrichtung der Antriebsspindel 1 wirkende, sich in entgegen der Arbeitsdrehrichtung A erstreckende, zum freien Ende 6 der Antriebsspindel 1 abgewinkelte Federzungen 19 auf.

Das topfförmig ausgebildete, einen kreisförmigen Querschnitt aufweisende Werkzeug 5 weist an seiner dem freien Ende 6 der Antriebsspindel 1 abgewandten Seite mehrere Abrasivelemente 17, beispielsweise Diamantpartikel, und etwa mittig eine Aufnahmebohrung 26 auf. Im radial äusseren Bereich sind mehrere, in Längsrichtung der Antriebsspindel 1 verlaufende, Durchgangsbohrungen 18 vorgesehen. Auf der dem Sperrring 4 zugewandten Seite 8 weist das Werkzeug 5 eine mit der, als Anschlagschultern wirkenden, Stirnfläche 21 der freien Enden 20 der Federzungen 19 Profilierung auf.

In einer ersten, in Fig. 1 und 2 dargestellte Ausführung, wird die Profilierung durch ein Sägezahnprofil 22 gebildet. Das Sägezahnprofil 22 weist mehrere Rampenflächen 23 und Verbindungsflächen 24 auf, wobei die Verbindungsfläche 24 leicht geneigt zur Längsachse der Antriebsspindel 1 verlaufen. Die Verbindungsflächen 24 bilden in der ersten Ausführung die Gegenschultern für die Anschlagsschultern, insbesondere die Stirnflächen 21 der Federzungen 19.

In einer zweiten, in Fig. 3 dargestellten, Ausführung weist das Werkzeug 5 mehrere Durchbrechungen 25 auf, deren Wandung als Gegenschulter für die Anschlagsschultern, insbesondere die Stirnflächen 21 der Federzungen 19 dient. Vorzugsweise sind die Durchbrechungen 25 als Durchgangsbohrungen ausgebildet und beispielsweise über den Umfang des Werkzeugs 5 gleichmässig verteilt angeordnet.

## Patentansprüche

1. Schleifgerät mit einer, in eine Arbeitsdrehrichtung (A), motorisch angetriebenen Antriebsspindel (1), die am freien Ende (6) eine Werkzeugaufnahme (7) aufweist, welche mit einem drehfest an der Antriebsspindel (1) befestigten Flansch (2) und einer, auf das freie Ende (6) aufschraubbaren Mutter (3), zum Verspannen eines Werkzeuges (5) gegen den Flansch (2), versehen ist, wobei die Werkzeugaufnahme (7) eine Drehsicherung (4) aufweist, die eine Rotation des Werkzeuges (5) gegenüber der Antriebsspindel (1) in Arbeitsdrehnchtung (A) der Antriebsspindel (1) verhindert, **dadurch gekennzeichnet, dass** die Drehsicherung (4) als Federelement ausgebildet ist, welches das Werkzeug (5) zum freien Ende (6) der Antriebsspindel (1) hin vorspannt.

2. Schleifgerät nach Anspruch 1, **dadurch gekennzeichnet, dass** die Drehsicherung (4) zumindest eine, gegenüber der Antriebsspindel (1) drehfest gelagerte, entgegen der Arbeitsrichtung (A) wirkende, Anschlagsschulter aufweist.

3. Schleifgerät nach Anspruch 1, **dadurch gekennzeichnet, dass** das Federelement zwischen dem Flansch (2) und dem Werkzeug (5) gelagert ist.

4. Schleifgerät nach Anspruch 1 oder 3, **dadurch gekennzeichnet, dass** das Federelement als zumindest eine Federzunge (19) eines an einem, am Flansch (2) gelagerten, Sperrrings (4) ausgebildet ist.

5. Schleifgerät nach Anspruch 4, **dadurch gekennzeichnet, dass** der Sperrring (4) drehfest am Flansch (2) gelagert ist.

6. Schleifgerät nach Anspruch 4 oder 5, **dadurch gekennzeichnet, dass** sich das freie Ende (20) der Federzunge (19) im wesentlichen zum freien Ende (6) der Antriebsspindel (1) hin erstreckt.

7. Schleifgerät nach einem der Ansprüche 4 bis 6, **dadurch gekennzeichnet, dass** die Anschlagsschulter durch die Stirnfläche (21) des freien Endes (20) der Federzunge (19) gebildet ist.

8. Schleifgerät nach einem der Ansprüche 1 bis 7, **dadurch gekennzeichnet, dass** das Werkzeug (5) zumindest eine zur Anschlagsschulter korrespondierende Gegenschulter aufweist.

9. Schleifgerät nach Anspruch 8, **dadurch gekennzeichnet, dass** die Gegenschulter von Durchbrechungen (25) im Werkzeug (5) gebildet wird.

## Claims

1. Grinding machine with a drive spindle (1) which is motor driven in a working rotary direction (A), comprising at the free end (6) a tool chuck (7) which is provided with a flange (2) which is non-rotary mounted on the drive spindle (1) and a nut (3) which is screwed onto the free end (6) for clamping a tool (5) against the flange (2), and the tool chuck (7) comprises a rotary lock (4) which prevents rotation of the tool (5) relative to the drive spindle (1) in the working rotary direction (A) of the drive spindle (1), **characterised in that** the rotary lock (4) is designed as a spring element which clamps the tool (5) toward the free end (6) of the drive spindle (1).

2. Grinding machine according to Claim 1, **characterised in that** the rotary lock (4) comprises at least one abutment shoulder which is relative to the drive spindle (1) non-rotary mounted and acts against the working direction (A).

3. Grinding machine according to Claim 1, **characterised in that** the spring element is mounted between the flange (2) and the tool (5).

4. Grinding machine according to Claim 1 or 3, **characterised in that** the spring element is designed as at least one spring tongue (19) of a locking ring (4) mounted on a flange (2).

5. Grinding machine according to Claim 4, **characterised in that** the locking ring (4) is non-rotary mounted on the flange (2).

6. Grinding machine according to Claim 4 or 5, **characterised in that** the free end (2) of the spring tongue (19) extends essentially toward the free end (6) of the drive spindle (1).

7. Grinding machine according to one of Claims 4 to 6, **characterised in that** the abutment shoulder is established by the end surface (21) of the free end (20) of the spring tongue (19).

8. Grinding machine according to one of Claims 1 to 7, **characterised in that** the tool (5) comprises at least one countering shoulder which corresponds with the abutment shoulder.

9. Grinding machine according to Claim 8, **characterised in that** the countering shoulder is formed by passages (25) in the tool (5).

## Revendications

1. Ponceuse avec une broche d'entraînement (1) qui est entraînée de manière motorisée dans une direction de rotation de travail (A) et qui, à son extrémité libre (6), comporte un raccord d'outil (7), lequel est muni d'une bride (2) solidarisée en rotation à la broche d'entraînement (1) et d'un écrou (3) vissable sur l'extrémité libre (6) afin de serrer un outil (5) contre la bride (2), le raccord d'outil (7) comportant un dispositif antirotation (4) qui empêche l'outil (5) de tourner par rapport à la broche d'entraînement (1) dans la direction de rotation de travail (A) de la broche d'entraînement (1), **caractérisée en ce que** le dispositif antirotation (4) est conformé en élément de ressort qui précontraint l'outil (5) vers l'extrémité libre (6) de la broche d'entraînement (1).

2. Ponceuse selon la revendication 1, **caractérisée en ce que** le dispositif antirotation (4) comporte au moins un épaulement de butée qui est monté solidaire en rotation par rapport à la broche d'entraînement (1) et qui agit à l'opposé de la direction de travail (A).

3. Ponceuse selon la revendication 1, **caractérisée en ce que** l'élément de ressort est monté entre la bride (2) et l'outil (5).

4. Ponceuse selon la revendication 1 ou 3, **caractérisée en ce que** l'élément de ressort est conformé en au moins une languette élastique (19) d'un anneau de blocage (4) monté sur la bride (2).

5. Ponceuse selon la revendication 4, **caractérisée en ce que** l'anneau de blocage (4) est solidarisé en rotation à la bride (2).

6. Ponceuse selon la revendication 4 ou 5, **caractérisée en ce que** l'extrémité libre (20) de la languette élastique (19) s'étend sensiblement vers l'extrémité libre (6) de la broche d'entraînement (1).

7. Ponceuse selon une des revendications 4 à 6, **caractérisée en ce que** l'épaulement de butée est formé par la face frontale (21) de l'extrémité libre (20) de la languette élastique (19).

8. Ponceuse selon une des revendications 1 à 7, **caractérisée en ce que** l'outil (5) comporte au moins un contre-épaulement correspondant à l'épaulement de butée.

9. Ponceuse selon la revendication 8, **caractérisée en ce que** le contre-épaulement est formé par des découpes (25) dans l'outil (5).
